# EUROPÄISCHE PATENTSCHRIFT

(11) **EP 1 169 793 B1**
(45) Veröffentlichungstag und Bekanntmachung des Hinweises auf die Patenterteilung: **22.06.2005**
(21) Anmeldenummer: 00926711.3
(22) Anmeldetag: 10.04.2000
(51) Int. Cl.: H04B 7/26

(54) **VERFAHREN ZUM ÜBERTRAGEN VON INFORMATIONEN IN EINEM FUNKSYSTEM UND ENTSPRECHENDES FUNKSYSTEM**
METHOD OF TRANSMITTING INFORMATION VIA A TELECOMMUNICATION SYSTEM AND CORRESPONDING TELECOMMUNICATION SYSTEM
PROCEDE POUR LA TRANSMISSION D'INFORMATIONS DANS UN SYSTEME RADIO, ET SYSTEME RADIO CORRESPONDANT

(30) Priorität: 09.04.1999 DE 19916070; 20.04.1999 DE 19917883
(43) Veröffentlichungstag der Anmeldung: 09.01.2002
(73) Patentinhaber: SIEMENS AKTIENGESELLSCHAFT, 80333 München (DE)
(72) Erfinder: RAAF, Bernhard, D-81475 München (DE); OESTREICH, Stefan, D-83607 Holzkirchen (DE)
(86) Internationale Anmeldenummer: PCT/DE2000/001095
(87) Internationale Veröffentlichungsnummer: WO 2000/062448

(56) Entgegenhaltungen:
- WO-A-94/29981
- US-A- 5 734 967
- TETSUJI KAWASHIMA ET AL: "CAPACITY ENHANCEMENT OF CELLULAR CDMA BY TRAFFIC-BASED CONTROL OF SPEECH BIT RATE" IEEE TRANSACTIONS ON VEHICULAR TECHNOLOGY,US,IEEE INC. NEW YORK, Bd. 45, Nr. 3, 1. August 1996 (1996-08-01), Seiten 543-550, XP000632297 ISSN: 0018-9545
- WONG W T K ET AL: "LOW RATE SPEECH CODING FOR TELECOMMUNICATIONS" BT TECHNOLOGY JOURNAL,GB,BT LABORATORIES, Bd. 14, Nr. 1, 1996, Seiten 28-43, XP000554637 ISSN: 1358-3948

## Beschreibung

Die vorliegende Erfindung betrifft ein Verfahren zum Übertragen von Informationen in einem Funksystem, wobei die Informationen zwischen einem Sender und einem Empfänger in komprimierter Form übertragen werden, sowie ein entsprechendes Funksystem, insbesondere ein entsprechendes Mobilfunksystem.

In Mobilfunksystemen werden bekannterweise Informationen in eine Rahmenstruktur eingebettet übertragen. Die Rahmenstruktur umfaßt mehrere sequentiell übertragene Rahmen, welche jeweils eine bestimmte Anzahl von Zeitschlitzen aufweisen. Hinsichtlich bekannter Mobilfunksysteme wurde vorgeschlagen, den Sender des Mobilfunksystems in einem sogenannten Komprimiermodus zu betreiben, wobei in diesem Fall die zu übertragenden Informationen innerhalb der Rahmen in komprimierter Form an einem Empfänger übertragen werden, um - wie nachfolgend noch näher erläutert wird - in dem entsprechenden Rahmen einen als Idle-Slot bezeichneten Abschnitt von Informationsbits freimachen zu können, der anschließend für Zwischenfrequenzmessungen (= "interfrequency measurements", das sind Messungen auf anderen Frequenzen), beispielsweise zur Vorbereitung eines Handovers zwischen verschiedenen Mobilfunksystemen, verwendet werden kann. Zur Komprimierung müssen die Informationen in einem verkürzten Zeitintervall übertragen werden. Diesbezüglich sind verschiedene Ansätze bekannt, welche nachfolgend näher erläutert werden sollen.

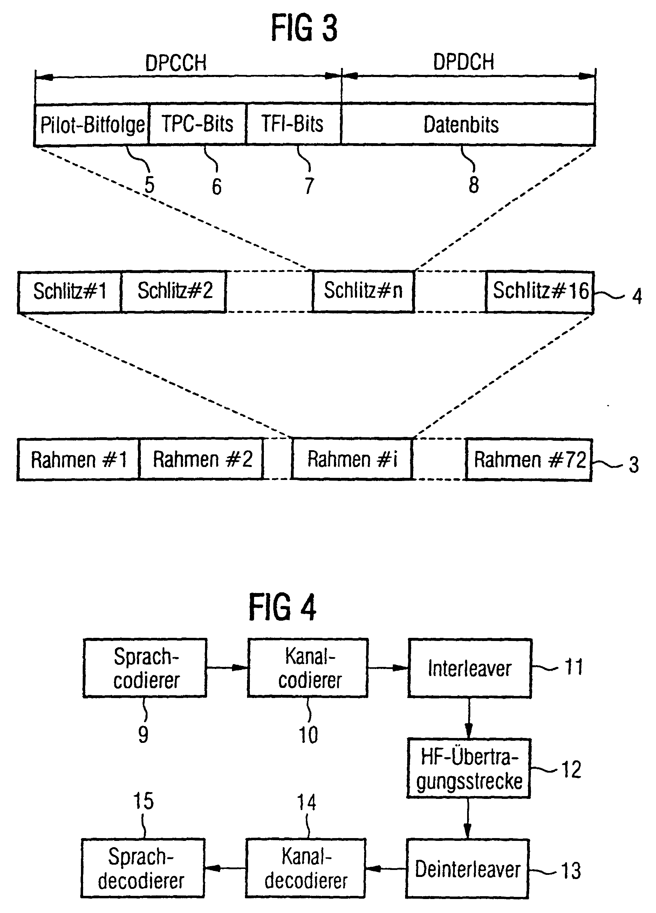

In Fig. 4 ist ein vereinfachtes Blockschaltbild der an der Codierung/Decodierung von Sprachsignalen in einem Mobilfunksystem beteiligten Komponenten dargestellt. Die über eine Hochfrequenz-Übertragungsstrecke 12 zu übertragenden Informationen werden zunächst mit einem digitalen Quellencodierer 9 in eine Bitfolge umgesetzt. Handelt es sich bei den zu übertragenden Informationen um Sprachinformationen, wird entsprechend ein Sprachcodierer 9 verwendet. Auf der Empfängerseite ist entsprechend ein Sprachdecodierer 15 vorgesehen. Die quellen- oder sprachcodierten Daten werden anschließend mit Hilfe eines Kanalcodierers 10 codiert, wobei den eigentlichen Nachrichtenbits zusätzliche redundante Bits hinzugefügt werden, mit deren Hilfe Übertragungsfehler erkannt und anschließend korrigiert werden können. Auf der Empfängerseite ist ein entsprechender Kanaldecodierer 14 vorgesehen. Vor der Übertragung der kanalcodierten Informationen zu dem Empfänger können diese einem Interleaver 11 zugeführt werden, der die zu übertragenden Datenelemente gemäß einem bestimmten Schema zeitlich umordnet und dabei zeitlich spreizt, wodurch die in der Regel bündelweise auftretenden Fehler verteilt werden, um einen sogenannten gedächnislosen (memoryless) Übertragungskanal mit einer quasizufälligen Fehlerverteilung zu erhalten, da dies von den meisten Kanalcodes vorausgesetzt wird. Die in Fig. 4 angedeutete Hochfrequenz-Übertragungsstrecke oder Luftschnittstelle 12 umfaßt schließlich im Sender eine Sendeeinheit sowie im Empfänger eine Empfangseinheit, wobei die Sendeeinheit die ihr zugeführten und zu übertragenden Daten auf ein Trägersignal aufmoduliert und gemäß einem bestimmten Vielfachzugriffsverfahren an die Empfangseinheit überträgt, welche das Empfangssignal wieder in das Basisband heruntermischt und einem Deinterleaver 13 zuführt.

Ein erster Ansatz zur Komprimierung der zu übertragenden Informationen sieht nunmehr vor, im Sender bei der Kanalcodierung eine höhere Codierrate zu verwenden. Da bei Verwendung einer Rahmenstruktur mit mehreren sequentiell übertragenen Rahmen die Anzahl der Informationsbits pro Rahmen konstant bleibt, wird in dem komprimierten Rahmen mit der höheren Codierrate ein sogenannter Idle-Slot oder Idle-Abschnitt, d.h. eine nicht mit Informationen belegter Abschnitt, generiert, der u.a. für Zwischenfrequenzmessungen verwendet werden kann, um beispielsweise einen Handover zwischen unterschiedlichen Mobilfunksystemen vorzubereiten. Diese Betriebsweise wird auch als "Slotted Mode" bezeichnet und ist beispielsweise in der Druckschrift UMTS xx.03, Abschnitt 1.1, "Coding For Slotted Mode" beschrieben.

In der Druckschrift ETSI SMG2 UMTS L1 Expert Group, Espoo, Helsinki, 14-18 December, 1998, wird alternativ vorgeschlagen, während der Übertragung sogenannte DTX-Zeitabschnitte (Discontinuous Transmission), d.h. Abschnitte, in denen während Sprachpausen keine Informationen übertragen werden, für die zuvor erwähnten Zwischenfrequenzmessungen zu verwenden. Derartige DTX-Zeitabschnitte treten bei bestimmten Diensten dadurch auf, daß die jeweils benötigte Übertragungskapazität nicht mit einem möglichen Spreizfaktor zusammenfällt. Der Nachteil bei diesem Verfahren besteht jedoch darin daß eine zusätzliche Verzögerung in der Größenordnung der Länge des jeweiligen DTX-Zeitabschnitts (hierunter wird im folgenden die Dauer des jeweiligen Abschnittes mit aktiver Sprache verstanden) auftritt.

Ein weiterer Ansatz schlägt zur Komprimierung der zu übertragenden Informationen vor, bei Anwendung eines Codemultiplexverfahrens (CDMA, Code Division Multiple Access) als Vielfachzugriffsverfahren einen geringeren Spreizfaktor zu verwenden. Bei Anwendung eines Codemultiplexverfahrens in einem digitalen Mobilfunksystem besitzen sämtliche Teilnehmer gleichzeitig die Möglichkeit, die gesamte zur Verfügung stehende Systembandbreite zu nutzen. Um Kollisionen zwischen den einzelnen Teilnehmern zu vermeiden, werden die digitalen Daten der einzelnen Teilnehmer mit unterschiedlichen Codesequenzen versehen, was zu einer Spreizung des jeweiligen Sendesignals führt, so daß die Codesequenzen auch als Spreizcode bezeichnet werden. Die Empfangseinheit des Empfängers arbeitet synchron mit der Codesequenz der Sendeinheit des Senders und macht die sendeseitige Spreizung wieder rückgängig. Durch den Entspreizvorgang im Empfänger wird nur dasjenige Signal wieder entspreizt und somit in der Bandbreite wieder verringert, welches den gleichen und synchronen Spreizcode wie der Empfänger verwendet. Wird im Sender eine Spreizsequenz verwendet, welche zu einer geringeren Spreizung des Sendesignals führt, können die zu übertragenden Informationen zeitlich komprimiert werden.

Die WO-A-9429981 offenbart ein Verfahren zum Übertragen von Informationen in einem Funksystem, wobei zu übertragende Informationen in speziellen Rahmen oder "Frames" in eine komprimierte Form gebracht werden. Die komprimierte Form oder der komprimierte Modus wird durch Verringerung des Spreizfaktors bzw. Spreiz-verhältnisses erreicht.

Die US-A-5734967 offenbart ein Verfahren zum Übertragen von Informationen in einem zellularen Kommunikationssystem bzw. Funksystem, wobei die Informationen nicht in einer derartigen Rahmenstruktur vorgesehen werden, dass in bestimmten Rahmen der Rahmenstruktur die Informationen in "komprimierter Form" übertragen werden.

Der vorliegenden Erfindung liegt die Aufgabe zugrunde, eine weitere, einfach zu realisierende Alternative für die komprimierte Übertragung von Informationen in einem Funksystem, insbesondere einem Mobilfunksystem, bereitzustellen.

Diese Aufgabe wird gemäß der vorliegenden Erfindung durch ein Verfahren mit den Merkmalen des Anspruches 1 bzw. ein entsprechendes Funksystem mit den Merkmalen des Anspruches 7 gelöst. Die Unteransprüche definieren vorteilhafte und bevorzugte Ausführungsformen der Erfindung.

Erfindungsgemäß wird die Komprimierung dadurch erreicht, daß die für die Quellencodierung im Sender verwendete Quellencodierrate verringert wird, so daß das Ursprungssignal, welches z.B. ein Sprachsignal ist, mit einer geringeren Bitrate übertragen wird wobei die Komprimierung der in komprimierter Form zu übertragenden Informationen zusätzlich zur Veränderung der Quellencodierrate auch durch Verändern einer Kanalcodierrate, mit der die zu übertragenden Informationen in dem Sender (1) einer Kanalcodierung unterzogen werden, und/oder durch Verändern eines Spreizfaktors, mit dem die zu übertragenden Informationen in dem Sender (1) gespreizt werden, durchgeführt wird. Durch die Komprimierung wird, wie eingangs beschrieben worden ist, ein sogenannter Idle-Slot in dem entsprechenden Übertragungsrahmen erzeugt, der zur Vorbereitung eines Handovers zwischen verschiedenen Mobilfunksystemen verwendet werden kann.

Für die Quellencodierung oder Sprachcodierung ist bevorzugt eine variable Quellencodierrate vorgesehen, so daß abhängig von den Betriebsbedingungen zwischen unterschiedlichen Quellencodierraten umgeschaltet werden kann. Besitzt beispielsweise eine als Sender fungierende Mobilstation nicht mehr genügend Leistungsreserven, um eine Leistungserhöhung für die Quellencodierung mit der normalen (erhöhten) Quellencodierrate durchzuführen, kann eine gegenüber der normalen Quellencodierrate verringerte Codierrate für die Quellencodierung verwendet werden. Ebenso ist in diesem Fall möglich, die für die Komprimierung zu nutzende Quellencodierrate optimal an die zur Verfügung stehende Übertragungskapazität anzupassen.

Der Vorteil der vorliegenden Erfindung besteht darin, daß für Sprachübertragungen durch die Komprimierung zur Erzeugung des Idle-Slots lediglich eine geringe Beeinträchtigung der Leistungsfähigkeit des Mobilfunksystems hervorgerufen wird.

Die vorliegende Erfindung kann insbesondere in UMTS-Mobilfunksystemen (Universal Mobile Communication System) eingesetzt werden, um Handovervorgänge, die beispielsweise analog zu dem GMS-Mobilfunkstandard (Global System For Mobile Communication) ablaufen können, durchzuführen. Für den UMTS-Mobilfunkstandard ist zwar bereits der sogenannte AMR-Sprachcodierer (Adaptive Multirate Coder) mit unterschiedlichen Sprachcodierraten bekannt. Diese unterschiedlichen Sprachcodierraten sind jedoch lediglich für unterschiedliche Übertragungsbedingungen vorgesehen. Gemäß der vorliegenden Erfindung wird nunmehr vorgeschlagen, diese unterschiedlichen Sprachcodierraten auch für die im sogenannten "Slotted Mode" betriebenen Rahmen zur Erzeugung des bereits erwähnten Idle-Slots durch Komprimierung der zu übertragenden Informationen anzuwenden, wobei dies insbesondere deshalb einfach zu realisieren ist, da die betroffenen Rahmen bereits von vornherein bekannt sind.

Die Erfindung wird nachfolgend unter Bezugnahme auf die beigefügte Zeichnung anhand eines Ausführungsbeispiels erläutert.
Fig. 1 zeigt eine vereinfachte Darstellung von bei Anwendung der vorliegenden Erfindung verwendeten Kompressionsraten zur Komprimierung von zu übertragenden Informationen,
Fig. 2 zeigt eine allgemeine schematische Darstellung zur Erläuterung der Informationsübertragung in einem Mobilfunksystem,
Fig. 3 zeigt die Rahmen- und Zeitschlitzstruktur für eine sogenannte Downlink-Verbindung gemäß dem derzeitigen Stand der UMTS-Normgebung, und
Fig. 4 zeigt ein vereinfachtes Blockschaltbild der an der Übertragung und Codierung bzw. Decodierung in einem Mobilfunksystem beteiligten Komponenten.

Die Erfindung wird nachfolgend anhand der bevorzugten Verwendung in einem UMTS-Mobilfunksystem erläutert. Des weiteren wird nachfolgend der Einfachheit halber davon ausgegangen, daß die zu übertragenden Informationen Sprachinformationen sind. Die Erfindung kann jedoch grundsätzlich auch auf andere Mobilfunksysteme bzw. andere Arten von Informationen, insbesondere bei UMTS-Mobilfunksystemen auch auf die Übertragung von Daten oder Bewegtbild- bzw. Multimediadaten, angewendet werden.

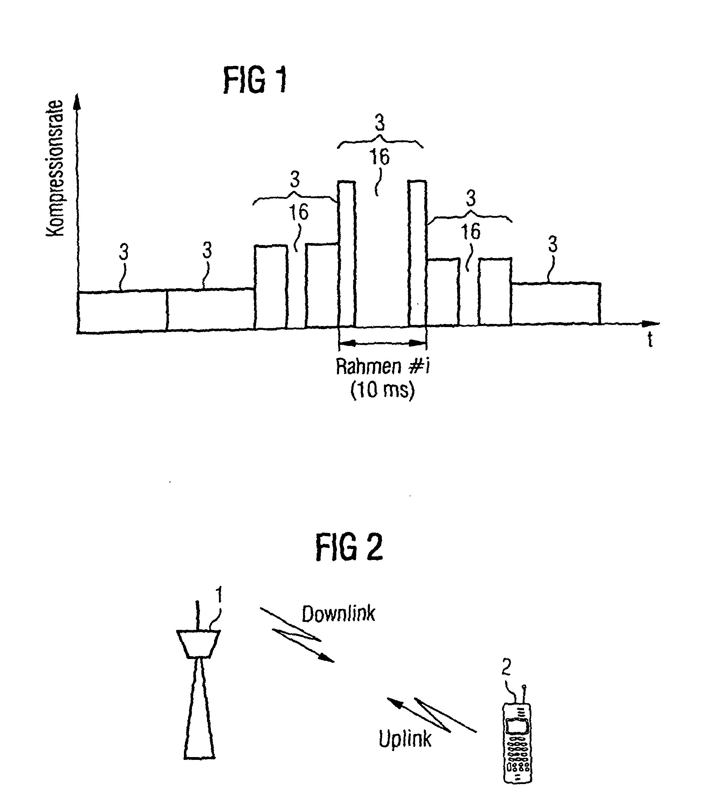

In Fig. 2 ist allgemein die Kommunikation zwischen einer Basisstation 1 und einer Mobilstation 2 eines Mobilfunksystems dargestellt. Eine Verbindung von der Basisstation 1 zum Mobilteil 2 wird als Downlink- oder Forward Link-Verbindung bezeichnet, während eine Verbindung von dem Mobilteil 2 zu der Basisstation 1 als Uplink- oder Reverse Link-Verbindung bezeichnet wird. Als ein Sonderfall für einen Downlink-Verbindung ist eine sogenannte "slotted" Downlink-Übertragung bekannt. Wie bereits erläutert worden ist, wird in diesem als "Slotte Mode" bezeichneten Betriebsmodus sendeseitig versucht, die zu übertragenden Informationen innerhalb eines entsprechenden Rahmens ("Slotted Frame") zeitlich zu komprimieren, um auf diese Weise in dem Rahmen einen nicht mit Informationsbits besetzten und als Idle-Slot bezeichneten Abschnitt zu generieren, der beispielsweise für Zwischenfrequenzmessungen zur Vorbereitung eines Handovers zwischen unterschiedlichen Mobilfunksystemen verwendet werden kann.

Dieser "Slotted Mode" wird derzeit insbesondere bei der Standardisierung des UMTS-Mobilfunksystems diskutiert.

In Fig. 3 ist die Rahmen- und Zeitschlitzstruktur für eine Downlink-Verbindung über einen auch als DPCH (Dedicated Physical Channel) bezeichneten UMTS-Mobilfunkkanal dargestellt. Die Rahmenstruktur mit einer Dauer von 720 ms umfaßt insbesondere 72 identisch aufgebaute Rahmen 3 mit einer Rahmendauer von 10 ms, wobei jeder Rahmen wiederum jeweils 16 Zeitschlitze 4 mit einer Zeitschlitzdauer von 0,625 ms aufweist. Jeder Zeitschlitz 4 umfaßt Bitinformationen, welche auf einen logischen Steuerkanal (DPCCH, Dedicated Physical Control Channel) und einen logischen Datenkanal (DPDCH, Dedicated Physical Data Channel) aufgeteilt sind. Die Bits des DPCCH-Abschnitts umfassen eine Pilot-Bitfolge 5 sowie sogenannte TPC-Steuerbits (Transmitter Power Control) 6 zur Leistungsregelung und TFI-Steuerbits (Transmitter Format Identifier) 7 als Formatkennungsinformation. Der DPDCH-Abschnitt umfaßt Nutzdatenbits 8. Die in Fig. 3 gezeigte Struktur kann beispielsweise dem Dokument ETSI STC SMG2 UMTS-L1: Tdoc SMG2 UMTS-L1 221/98 entnommen werden. Die Uplink-Rahmenstruktur ist zu der Downlink-Rahmenstruktur ähnlich, wobei die Unterschiede zwischen den einzelnen Rahmenstrukturen jedoch für die vorliegende Erfindung ohne Belang sind.

Im Sender ist von vornherein bekannt, welche der zeitlich sequentiell übertragenen Rahmen 3 in dem "Slotted Mode" betrieben werden sollen. Zu diesem Zweck müssen sendeseitig die in diesen Rahmen enthaltenen bzw. zu übertragenden Informationen komprimiert werden, um diese Informationen in den entsprechenden Rahmen in einem verkürzten Zeitintervall zu übertragen.

Erfindungsgemäß wird zu diesem Zweck vorgeschlagen, die Komprimierung durch den in Fig. 4 gezeigten Quellen- bzw. Sprachcodierer 9 zu realisieren, indem zur Sprachcodierung eine gegenüber der üblichen Sprachcodierung verringerte Sprachcodierrate verwendet wird, um das Informations- bzw. Sprachsignal auf eine geringere Bitrate zu komprimieren.

In Fig. 1 sind beispielhaft sechs zeitlich aufeinanderfolgende Rahmen 3 mit den für die jeweiligen Rahmen von dem Sprachcodierer 9 verwendeten Kompressionsraten dargestellt. Die in Fig. 1 dargestellten ersten beiden Rahmen 3 sind in Übereinstimmung mit dem derzeit bekannten Stand der Technik mit einer normalen Sprachcodierrate codiert. An diese beiden Rahmen schließen sich drei erfingungsgemäß mit niedrigeren Sprachcodierraten bzw. höheren Kompressionsraten codierte Rahmen 3 an. Durch die Verwendung niedrigerer Sprachcodierraten werden die innerhalb des jeweiligen Rahmens zu übertragenden Informationsbits während eines kürzeren Zeitintervalls übertragen, so daß in jedem dieser Rahmen ein bereits erwähnter Abschnitt 16 generiert wird, der nicht mit Informationsbits belegt ist.

Dieser als Idle-Slot bezeichnete freie Abschnitt 16 kann, wie ebenfalls bereits erwähnt worden ist, vorteilhafterweise für Zwischenfrequenzmessungen verwendet werden, um einen Handover zwischen unterschiedlichen Mobilfunksystemen vorzubereiten, was ein wesentliches Leistungsmerkmal für Zwei- oder Mehrband-Mobilstationen ist. Soll beispielsweise eine Verbindung von einem gemäß dem Frequenzduplexverfahren (Frequency Division Duplex, FDD) betriebenen UMTS-Mobilfunksystem, bei dem für die Uplink- und Downlink-Verbindung unterschiedliche Übertragungsfrequenzen vorgesehen sind, um gleichzeitig senden und empfangen zu können, auf das GSM-Mobilfunksystem übertragen werden, muß zur Vorbereitung des Handovers eine Leistungsmessung der sogenannten BCCH-Träger (Broadcast Control Channel) des GSM-Mobilfunksystems durchgeführt und der Frequenzkorrekturkanal (FCCH, Frequency Correction Channel) bzw. der Synchronisierungskanal (SCH, Synchronisation Channel) des GSM-Mobilfunksystems erfaßt, decodiert und mit den zuvor durchgeführten Leistungsmessungen koordiniert werden. Die zuvor beschriebenen Messungen können innerhalb der in Fig. 1 angedeuteten Idle-Slots 16 durchgeführt werden, wenn diese lang genug sind.

In Übereinstimmung mit dem in Fig. 1 dargestellten Beispiel können von dem Sprachcodierer des Sender unterschiedliche Sprachcodierraten angeboten werden, welche abhängig von den Betriebsbedingungen eingesetzt werden. Gemäß Fig. 1 wird dabei der mittlere Rahmen 3 mit der geringsten Sprachcodierrate und dementsprechend mit der höchsten Kompressionsrate codiert, was entsprechend die längste zeitliche Dauer des Idle-Slots 16 zur Folge hat. Die beiden benachbarten Rahmen sind zwar gegenüber der normalen Sprachcodierrate ebenfalls mit einer veringerten Sprachcodierrate codiert, um die Komprimierung der zu übertragenden Informationen durchzuführen. Ihre Sprachcodierrate ist jedoch gegenüber derjenigen des mittleren Rahmens höher, so daß auch die zeitliche Dauer des jeweils darin ausgebildeten Idle-Slots 16 kürzer ist.

In dem Sender kann beispielsweise eine Einheit vorgesehen sein, welche die augenblicklich zur Verfügung stehende Übertragungskapazität erfaßt und dem Sprachcodierer mitteilt, so daß dieser abhängig von der zur Verfügung stehenden Übertragungskapazität die jeweils optimale Sprachcodierrate auswählt und für die Sprachcodierung einsetzt. Die Übertragungskapazität hängt dabei im wesentlichen im Uplink von der Sendeleistung der Mobilstation 2 und im Downlink von der Gesamtleistung der Basisstation 1 ab. Ebenso kann für den Fall, daß es sich bei dem Sender um eine Mobilstation 2 handelt, die Sprachcodierrate in der Mobilstation verringert werden, falls die Mobilstation 2 nicht mehr genügend Leistungsreserven hat, um die zur Sprachcodierung mit einer relativ hohen Sprachcodierrate erforderliche Leistungserhöhung durchzuführen.

Gemäß einem besonderen Ausführungsbeispiel ist der Sprachcodierer 9 insbesondere derart ausgestaltet, daß er drei unterschiedliche Sprachcodierraten anbietet. Die höchste Sprachcodierrate wird zur Sprachcodierung der nicht im Komprimiermodus bzw. "Slotted Mode" zu übertragenden Rahmen verwendet. Die beiden anderen niedrigeren Sprachcodierraten werden hingegen für den "Slotted Mode" verwendet, wobei hiervon die höhere Sprachcodierrate dann zum Einsatz kommt, wenn die Sendeleistung hierzu ausreichend ist, ansonsten wird für den "Slotted Mode" die niedrigere Sprachcodierrate verwendet. Beide gegenüber der herkömmlichen Sprachcodierrate verringerten Sprachcodierraten generieren einen Idle-Slot mit einer für Zwischenfrequenzmessungen ausreichenden Zeitdauer.

Zusätzlich kann die Veränderung der Quellencodierrate auch mit anderen Komprimierungsverfahren kombiniert werden, wie sie in der Beschreibungseinleitung erwähnt worden sind. Beispielsweise kann zusätzlich zur Verringerung der Quellencodierrate auch die Kanalcodierrate verändert oder ein anderer Spreizfaktor verwendet werden. Dies ist insbesondere dann vorteilhaft, wenn die verringerte Quellencodierrate nicht zur Generierung eines ausreichend langen Idle-Slots 16 ausreicht.

Gemäß einer besonders vorteilhaften Ausgestaltung wird die Quellencodierrate so stark verringert, daß die entsprechende Information ohne Erhöhung der Sendeleistung übertragen werden kann.

## Patentansprüche

1. Verfahren zum Übertragen von Informationen in einem Funksystem,
wobei zu übertragende Informationen in einem Sender (1) durch eine Quellencodierung in digitale Daten umgesetzt und anschließend auf ein Trägersignal aufmoduliert werden,
wobei die somit quellencodierten und auf das Trägersignal aufmodulierten Informationen in eine Rahmenstruktur eingebettet an einen Empfänger (2) übertragen werden, und
wobei in bestimmten Rahmen (3) der Rahmenstruktur die Informationen in komprimierter Form übertragen werden,
**dadurch gekennzeichnet,**
**daß** die in den bestimmten Rahmen (3) in komprimierter Form zu übertragenden Informationen in dem Sender (1) durch Verringern der Quellencodierrate, mit der die Quellencodierung durchgeführt wird, komprimiert werden,
wobei die Komprimierung der in komprimierter Form zu übertragenden Informationen zusätzlich zur Veränderung der Quellencodierrate auch durch Verändern einer Kanalcodierrate, mit der die zu übertragenden Informationen in dem Sender (1) einer Kanalcodierung unterzogen werden, und/oder durch Verändern eines Spreizfaktors, mit dem die zu übertragenden Informationen in dem Sender (1) gespreizt werden, durchgeführt wird.

2. Verfahren nach Anspruch 1,
**dadurch gekennzeichnet,**
**daß** die Quellencodierrate in dem Sender (1) für jeden Rahmen (3) individuell angepaßt wird.

3. Verfahren nach Anspruch 1 oder 2,
**dadurch gekennzeichnet,**
**daß** die Informationen in den bestimmten Rahmen (3) innerhalb einer kürzeren Übertragungszeit als bei anderen Rahmen übertragen wird, wobei für diese Rahmen im Verhältnis zu den anderen Rahmen eine verringerte Quellencodierrate verwendet wird.

4. Verfahren nach Anspruch 2 oder 3,
**dadurch gekennzeichnet,**
**daß** die Quellencodierrate umso geringer gewählt wird, je kürzer die Übertragungszeit, während der die entsprechenden Informationen übertragen werden, des jeweiligen Rahmens (3) ist.

5. Verfahren nach einem der vorhergehenden Ansprüche,
**dadurch gekennzeichnet,**
**daß** die Quellencodierrate für die Quellencodierung in Abhängigkeit von der zur Verfügung stehenden Übertragungskapazität gewählt wird.

6. Verfahren nach einem der vorhergehenden Ansprüche,
**dadurch gekennzeichnet,**
**daß** die Quellencodierung im Normalfall mit einer bestimmten Standard-Quellencodierrate durchgeführt wird, und
**daß** die Quellencodierung mit einer gegenüber der Standard-Quellencodierrate verringerten Quellencodierrate durchgeführt wird, falls die Sendeleistung des Senders (1) nicht für die Standard-Quellencodierrate ausreicht.

7. Funksystem,
mit einem Sender (1) und einem Empfänger (2),
wobei der Sender (1) einen Quellencodierer (9) zur Quellencodierung von zu übertragenden Informationen aufweist, um diese in digitale Daten umzusetzen, sowie eine
Sendeeinheit (12), um die somit quellencodierten Informationen auf ein Trägersignal aufzumodulieren und in eine Rahmenstruktur eingebettet an den Empfänger (2) zu übertragen, wobei in bestimmten Rahmen (3) der Rahmenstruktur die Informationen in komprimierter Form an den Empfänger (2) übertragen werden,
**dadurch gekennzeichnet,**
**daß** der Quellencodierer (9) unterschiedliche Quellencodierraten für die Durchführung der Quellencodierung bereitstellt, und
**daß** der Quellencodierer (9) die Quellencodierung zur Übertragung der Informationen in der komprimierten Form mit einer verringerten Quellencodierrate durchführt,
wobei der Sender ferner eingerichtet ist, die Komprimierung der in komprimierter Form zu übertragenden Informationen zusätzlich zur Veränderung der Quellencodierrate auch durch Verändern einer Kanalcodierrate, mit der die zu übertragenden Informationen in dem Sender (1) einer Kanalcodierung unterzogen werden, und/oder durch Verändern eines Spreizfaktors, mit dem die zu übertragenden Informationen in dem Sender (1) gespreizt werden, durchzuführen.

8. Funksystem nach Anspruch 7,
**dadurch gekennzeichnet,**
**daß** der Quellencodierer (9) die Quellencodierrate für jeden Rahmen (3) individuell einstellt.

9. Funksystem nach Anspruch 7 oder 8,
**dadurch gekennzeichnet,**
**daß** der Quellencodierer (9) die Quellencodierrate für die Quellencodierung in Abhängigkeit von der zur Verfügung stehenden Übertragungskapazität einstellt.

10. Funksystem nach einem der Ansprüche 7-9,
**dadurch gekennzeichnet,**
**daß** der Quellencodierer (9) die Quellencodierung im Normalfall mit einer bestimmten Standard-Quellencodierrate durchführt, und
**daß** der Quellencodierer (9) die Quellencodierung mit einer gegenüber der Standard-Quellencodierrate verringerten Quellencodierrate durchgeführt, falls die Sendeleistung der Sendeeinheit (12) nicht für die Standard-Quellencodierrate ausreicht.

11. Funksystem nach einem der Ansprüche 7-10,
**dadurch gekennzeichnet,**
**daß** die Sendeeinheit (12) die Informationen an den Empfänger (2) gemäß dem UMTS-Mobilfunkstandard überträgt.

12. Funksystem nach einem der Ansprüche 7-11,
**dadurch gekennzeichnet,**
**daß** der Quellencodierer (9) bzw. der Sender (1) zur Durchführung des Verfahrens nach einem der Ansprüche 1-7 ausgestaltet ist.

## Claims

1. Method for transmitting information in a radiocommunication system, in which information to be transmitted is converted into digital data by source coding in a transmitter (1) and then modulated onto a carrier signal, the information thus source coded and modulated onto the carrier signal being transmitted embedded in a frame structure to a receiver (2) and the information being transmitted in compressed form in particular frames (3) of the frame structure, **characterized in that** the information to be transmitted in compressed form in the particular frames (3) is compressed in the transmitter (1) by reducing the source coding rate with which the source coding is performed the compression of the information to be transmitted in compressed form being performed, in addition to changing the source coding rate, also by changing a channel coding rate with which the information to be transmitted is subjected to channel coding in the transmitter (1), and/or by changing a spreading factor by means of which the information to be transmitted is spread in the transmitter (1).

2. Method according to Claim 1, **characterized in that** the source coding rate is individually adapted for each frame (3) in the transmitter (1).

3. Method according to Claim 1 or 2, **characterized in that** the information in the particular frames (3) is transmitted within a shorter transmission time than in the case of other frames, a reduced source coding rate being used for these frames compared to the other frames.

4. Method according to Claim 2 or 3, **characterized in that**, the shorter the transmission time of the respective frame (3) during which the corresponding information is transmitted, the lower the source coding rate is selected.

5. Method according to one of the preceding claims, **characterized in that** the source coding rate for the source coding is selected in dependence on the available transmission capacity.

6. Method according to one of the preceding claims, **characterized in that** the source coding is normally performed with a certain standard source coding rate, and **in that** the source coding is performed with a source coding rate which is reduced compared with the standard source coding rate if the transmitting power of the transmitter (1) is not sufficient for the standard source coding rate.

7. Radiocommunication system comprising a transmitter (1) and a receiver (2), the transmitter (1) having a source encoder (9) for the source coding of information to be transmitted in order to convert this information into digital data, and a transmit unit (12) in order to modulate the information thus source-coded onto a carrier signal and to transmit it, embedded in a frame structure, to the receiver (2), the information being transmitted in compressed form in particular frames (3) of the frame structure to the receiver (2), **characterized in that** the source encoder (9) provides different source coding rates for performing the source coding, and **in that** the source encoder (9) performs the source coding with a reduced source coding rate for transmitting the information in compressed form, the transmitter furthermore being installed to perform the compression of the information to be transmitted in compressed form, in addition to changing the source coding rate, also by changing a channel coding rate with which the information to be transmitted is subjected to channel coding in the transmitted (1), and/or by changing a spreading factor by means of which the information to be transmitted is spread in the transmitted (1).

8. Radiocommunication system according to Claim 7,
**characterized in that** the source encoder (9) individually adjusts the source coding rate for each frame (3).

9. Radiocommunication system according to Claim 7 or 8, **characterized in that** the source encoder (9) adjusts the source coding rate so the source coding in dependence on the available transmission capacity.

10. Radiocommunication system according to one of Claims 7 - 9, **characterized in that** the source encoder (9) normally performs the source coding with a particular standard source coding rate and **in that** the source encoder (9) performs the source coding with a source coding rate which is reduced compared with the standard source coding rate if the transmitting power of the transmit unit (12) is not sufficient for the standard source coding rate.

11. Radiocommunication system according to one of Claims 7 - 10, **characterized in that** the transmit unit (12) transmits the information to the receiver (2) in accordance with the UMTS mobile radiocommunication standard.

12. Radiocommunication system according to one of Claims 7 - 11, **characterized in that** the source encoder (9) or the transmitter (1), respectively, is equipped for performing the method as claimed in one of Claims 1 - 7.

## Revendications

1. Procédé pour transmettre des informations dans un système radio, des informations à transmettre étant converties en données numériques dans un émetteur (1) par un codage source pour être ensuite modulées sur un signal porteur, les informations ainsi codées source et modulées sur le signal porteur étant transmises à un récepteur (2) incorporées dans une structure de trame, et les informations étant transmises sous forme comprimée dans certaines trames (3) de la structure de trame,
**caractérisé en ce que**
les informations à transmettre sous forme comprimée dans des trames (3) déterminées sont comprimées dans l'émetteur (1) par diminution du débit de codage source auquel le codage source est exécuté, la compression des informations à transmettre sous forme comprimée étant effectuée en plus de la modification du débit de codage source également par modification d'un débit de codage de voie, auquel les informations à transmettre sont soumises à un codage de voie dans l'émetteur (1), et/ou est effectuée par modification d'un facteur d'étalement avec lequel les informations à transmettre sont étalées dans l'émetteur (1).

2. Procédé selon la revendication 1,
**caractérisé en ce que**
le débit de codage source est adapté individuellement dans l'émetteur (1) pour chaque cas (3).

3. Procédé selon la revendication 1 ou 2,
**caractérisé en ce que**
les informations dans les trames (3) déterminées sont transmises en un temps de transmission plus court qu'avec les autres trames, un débit de codage source réduit étant utilisé pour ces trames par rapport aux autres trames.

4. Procédé selon la revendication 2 ou 3,
**caractérisé en ce que**
le débit de codage source est choisi d'autant plus réduit que le temps de transmission de la trame (3) respective est court, pendant lequel les informations correspondantes sont transmises.

5. Procédé selon l'une des revendications précédentes,
**caractérisé en ce que**
le débit de codage source pour le codage source est choisi en fonction de la capacité de transmission disponible.

6. Procédé selon l'une des revendications précédentes,
**caractérisé en ce que**
le codage source est effectué en cas normal à un débit de codage source standard déterminé, et **en ce que** le codage source est effectué à un débit de codage source réduit par rapport au débit de codage source standard, si la puissance d'émission de l'émetteur (1) n'est pas suffisante pour le débit de codage source standard.

7. Système radio,
comportant un émetteur (1) et un récepteur (2),
l'émetteur (1) présentant un codeur source (9) pour le codage source d'informations transmises, pour convertir celles-ci en données numériques, ainsi qu'une unité émettrice (12), pour moduler sur un signal porteur des informations ainsi codées source et les transmettre au récepteur (2) incorporées dans une structure de trame, les informations étant transmises sous forme comprimée au récepteur (2) dans certaines trames (3) de la structure de la trame,
**caractérisé en ce que**
le codeur source (9) fournit différents débits de codage source pour l'exécution du codage source, et
**en ce que** le codeur source (9) effectue le codage source pour la transmission des informations sous forme comprimée à un débit de codage source réduit, l'émetteur étant en outre configuré pour effectuer la compression des informations à transmettre sous forme comprimée en sus de la modification du débit de codage source également par modification d'un débit de codage de voie, auquel les informations à transmettre dans l'émetteur (1) sont soumises à un codage de voie, et/ou par modification d'un facteur d'étalement avec lequel les informations à transmettre dans l'émetteur (1) sont étalées.

8. Système radio selon la revendication 7,
**caractérisé en ce que**
le codeur source (9) ajuste individuellement le débit de codage source pour chaque trame (3).

9. Système radio selon la revendication 7 ou 8,
**caractérisé en ce que**
le codeur source (9) ajuste le débit de codage source pour le codage source en fonction de la capacité de transmission disponible.

10. Système radio selon l'une des revendications 7 à 9,
**caractérisé en ce que**
le codeur source (9) effectue le codage source en cas normal à un débit de codage source standard déterminé, et
**en ce que** le codeur source (9) effectue le codage source à un débit de codage source réduit par rapport au débit de codage source standard, si la puissance d'émission de l'unité émettrice (12) est insuffisante pour le débit de codage source standard.

11. Système radio selon l'une des revendications 7 à 10,
**caractérisé en ce que**
l'unité émettrice (12) transmet les informations au récepteur (2) selon la norme de téléphonie mobile UMTS.

12. Système radio selon l'une des revendications 7 à 11,
**caractérisé en ce que**
le codeur source (9) resp. l'émetteur (1) est conçu pour exécuter le procédé selon l'une des revendications 1 à 7.
